# EUROPEAN PATENT SPECIFICATION

(11) **EP 3 076 475 B1**
(45) Date of publication and mention of the grant of the patent: **08.05.2019**
(21) Application number: 16158288.7
(22) Date of filing: 02.03.2016
(51) Int. Cl.: H01M 10/24, H01M 10/36, H01M 10/42, H01M 16/00

(54) **ACID/ALKALINE HYBRID RESONANCE BATTERY DEVICE WITH DAMPING FUNCTION**
SAURE/BASISCHE HYDRIDRESONANZBATTERIEVORRICHTUNG MIT DÄMPFUNGSFUNKTION
DISPOSITIF DE BATTERIE DE RÉSONANCE HYBRIDE ACIDE/ALCALINE AVEC FONCTION D'AMORTISSEMENT

(30) Priority: 30.03.2015 CN 201510144072
(43) Date of publication of application: 05.10.2016
(73) Proprietor: Hsu, Fu-Tzu, Taipei City 10463 (TW); Tu, Chieh-Sen, New Taipei City 23158 (TW); Crystal Sky International Limited, Taipei City (TW)
(72) Inventor: HSU, Fu-Tzu, Taipei City (TW); TU, Chien-Sen, New Taipei City (TW)
(74) Representative: Lermer, Christoph

(56) References cited:
- DE-A1-102007 041 526
- DE-A1-102012 209 731
- US-A1- 2011 003 182

## Description

### FIELD OF THE INVENTION

The present invention relates to an acid/alkaline hybrid resonance battery device with damping function, in which an acid rechargeable cell unit and an alkaline rechargeable cell unit are connected in parallel to form an individual battery cell of the battery device.

### BACKGROUND OF THE INVENTION

A cell is a basic unit constituting a battery. According to the electrolyte used, rechargeable cells can be generally classified into two types, namely, acid battery and alkaline battery. The electrolyte for the acid battery can be a water solution of sulfuric acid. One example of such acid cell is a lead-acid battery. The lead-acid battery has some disadvantages, such as bulky, heavy, causing pollution and slow redox reaction, and therefore has been replaced by lithium iron phosphate battery. An acid secondary cell can store electrical energy in the form of electric current, and will become damaged when the stored electric current (I) is fully discharged (i.e. when I = 0).

The electrolyte for an alkaline secondary cell is mainly a water solution of potassium hydroxide. Some examples of such alkaline rechargeable cell are alkaline zinc-manganese battery, nickel-cadmium battery and nickel-hydrogen battery. The alkaline rechargeable cell can store electrical energy in the form of voltage and will become damaged when it is discharged to have a voltage of zero, i.e. when V = 0. Generally, a battery is dead and can no longer discharge when it is discharged to have a voltage lower than 1.0V. The alkaline rechargeable cell must be charged with very small electric current and usually requires more than 24 hours to be fully charged. Further, the alkaline secondary cell can be recharged several times only and is therefore inconvenient for use. Moreover, the alkaline rechargeable cell tends to have a rising temperature when it is being charged and discharged.

All the electrical appliances that use secondary cells as a power source are internally provided with a battery management system (BMS). Normally, the battery management system has the function of measuring battery voltage to prevent or avoid battery over-discharge, over-charge, overheat, and other abnormal conditions. For an electrical device that uses multiple parallelly connected rechargeable cells as its power supply, the electrical device will stop supplying power when the battery management system thereof detects any one of the rechargeable cells has an insufficient voltage. Most consumers do not understand why the battery having electrical energy stored therein just could not discharge to even cause crash of the load. The sudden crash of the load tends to cause danger, particularly when a motor vehicle suddenly loses its power supply during moving.

The DE 10 2007 041 526 A1 discloses an energy storage device comprising several storage elements which are combined together.

### SUMMARY OF THE INVENTION

A primary object of the present invention is to provide an acid/alkaline hybrid resonance battery device with damping function, which is formed of a plurality of similar battery cells connected in either series or parallel, and every battery cell internally produces a self-resonance damping effect to enable fast charge and fast discharge of the battery device.

Another object of the present invention is to provide an acid/alkaline hybrid resonance battery device with damping function, which enables automatic balance of internal potential and accordingly, does not require any battery management system (BMS).

To achieve the above and other objects, the acid/alkaline hybrid resonance battery device with damping function provided according to the present invention is formed of a plurality of similar battery cells connected in either series or parallel. Every battery cell includes an acid rechargeable cell unit and an alkaline rechargeable cell unit. Due to the resonance damping effect between the acid rechargeable cell unit and the alkaline rechargeable cell unit, a balanced electric potential between them can be automatically achieved to facilitate fast charge and fast discharge of the battery device.

The acid secondary cell unit and the alkaline rechargeable cell unit are electrically connected in parallel. The acid rechargeable cell unit includes at least one acid rechargeable cell, and the alkaline rechargeable cell unit includes at least two serially connected alkaline rechargeable cells. The acid rechargeable cell unit has an electric potential and a capacity close to or equal to those of the alkaline rechargeable cell unit, so that a resonance damping effect is produced between the acid rechargeable cell unit and the alkaline rechargeable cell unit.

The acid secondary cell is a lithium iron phosphate (LFP) acid rechargeable cell; and the alkaline rechargeable cell is a nickel-zinc alkaline rechargeable cell.

In the case of having more than one acid rechargeable cell in the acid rechargeable cell unit, the acid rechargeable cells can be connected in parallel to give the acid rechargeable cell unit an increased capacity. The alkaline rechargeable cells in the alkaline rechargeable cell unit can be connected in series to give the latter an increased capacity.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 shows the structure of an acid/alkaline hybrid resonance battery device with damping function according to a first embodiment of the present invention;
Fig. 2 shows the structure of one of many battery cells forming the battery device of Fig. 1;
Fig. 3 is a block diagram showing the present invention is charged with a damping charging device;
Fig. 4 shows the structure of an acid/alkaline hybrid resonance battery device with damping function according to a second embodiment of the present invention; and
Fig. 5 shows the structure of one of many battery cells forming the battery device of Fig. 4.

### DETAILED DESCRIPTION OF THE PREFERRED EMBODIMENTS

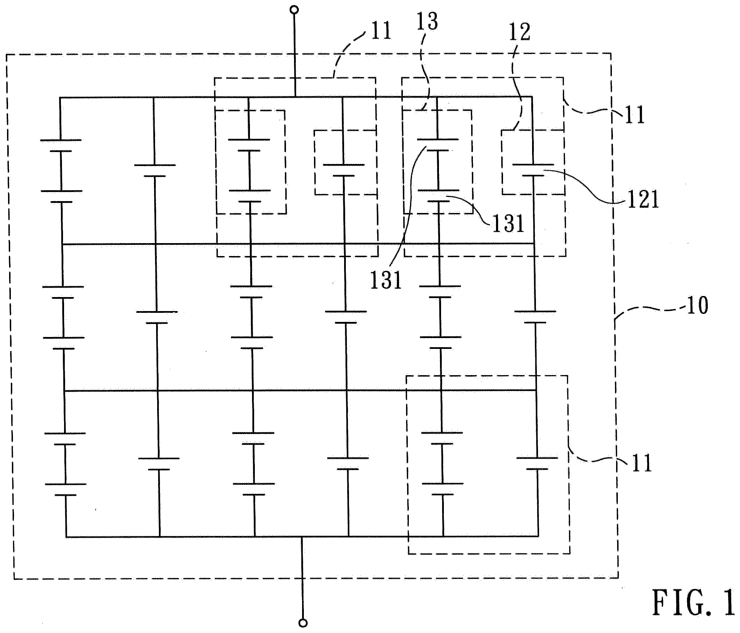

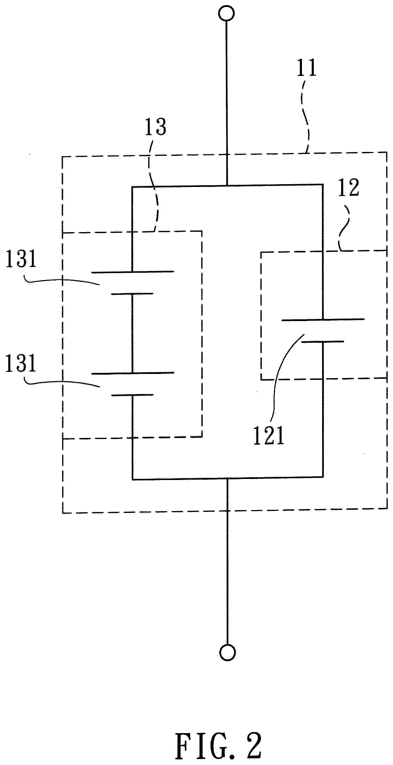

Please refer to Figs. 1 and 2, in which the structure of an acid/alkaline hybrid resonance battery device with damping function according to a first embodiment of the present invention is shown. For the purpose of conciseness and clarity, the present invention is also briefly referred to as the battery device and generally denoted by reference numeral 10 herein. As shown, the battery device 10 in the first embodiment is formed of a plurality of similar battery cells 11 connected in either series or parallel. Every battery cell 11 includes an acid rechargeable cell unit 12 and an alkaline rechargeable cell unit 13, which are electrically connected in parallel.

In the illustrated first embodiment, the acid rechargeable cell unit 12 consists of one acid rechargeable cell 121, and the alkaline rechargeable cell unit 13 consists of two alkaline rechargeable cells 131 that are connected in series. The acid rechargeable cell unit 12 and the alkaline rechargeable cell unit 13 are electrically connected in parallel. The acid rechargeable cell unit 12 has an electric potential close or equal to that of the alkaline rechargeable cell unit 13. More specifically, the acid rechargeable cell unit 12 preferably has an electric potential that is about from 90 to 110% of the electric potential of the alkaline rechargeable cell unit 13. A best battery performance can be achieved when the acid rechargeable cell unit 12 has an electric potential equal to that of the alkaline rechargeable cell unit 13. Generally, a commercially available acid rechargeable cell 121 has an electric potential from 3.2 to 3.6V, and a commercially available alkaline rechargeable cell 131 has an electric potential about 1.6V to 1.8V. So far, there has not yet been any battery device 10, of which the acid rechargeable cell unit 12 and the alkaline rechargeable cell unit 13 can have equal electric potential.

The acid rechargeable cell 121 and the alkaline rechargeable cell 131 are made of different material and accordingly, have different energy levels. Basically, the acid rechargeable cell unit 12 is suitable for storing electrical energy in the form of electric current, while the alkaline rechargeable cell unit 13 is suitable for storing electrical energy in the form of voltage.

The acid rechargeable cell unit 12 has a capacity close or equal to that of the alkaline rechargeable cell unit 13. More specifically, the acid rechargeable cell unit 12 preferably has a capacity that is about from 90 to 110% of the capacity of the alkaline rechargeable cell unit 13. A best battery performance can be achieved when the acid rechargeable cell unit 12 has a capacity equal to that of the alkaline rechargeable cell unit 13. However, since the true capacity of the second cell 121, 131 is the work (W) the cell can accommodate, that is, Work (W) = voltage (V) x current (I) x time (T), it is uneasy for the acid rechargeable cell unit 12 to have a real work capacity equal to that of the alkaline rechargeable cell unit 13.

Since the acid rechargeable cell unit 12 and the alkaline rechargeable cell unit 13 are different in their energy levels, and since a completely balanced electric potential between the acid rechargeable cell unit 12 and the alkaline rechargeable cell unit 13 must be achieved, an instantaneous voltage imbalance, i.e. a somewhat large voltage difference, between the acid rechargeable cell unit 12 and the alkaline rechargeable cell unit 13 occurred during the charge and the discharge process of the battery cell 11 would cause the alkaline rechargeable cell unit 13 having a higher instantaneous electric potential to automatically transfer the stored electrical energy to the acid rechargeable cell unit 12 that has a lower electric potential relative to the alkaline rechargeable cell unit 13, or cause the acid rechargeable cell unit 12 having a higher instantaneous electric potential to automatically transfer the stored electrical energy to the alkaline rechargeable cell unit 13 that has a lower electric potential relative to the acid rechargeable cell unit 12, so that the electric potential of the acid rechargeable cell unit 12 and of the alkaline rechargeable cell unit 13 gradually become the same and balanced. This automatic internal self-resonance condition produces a damping effect. Even when the battery cell 11 is not in the charge and discharge process, the internal self-resonance of the battery cell 11 still exists to produce the damping effect, bringing the electric potential of the acid rechargeable cell unit 12 and of the alkaline rechargeable cell unit 13 to become equal or close to each other and finally into a balanced state.

In the first embodiment illustrated in Figs. 1 and 2, the acid rechargeable cell unit 12 consists of one 3.2∼3.6V acid rechargeable cell 121 and the alkaline rechargeable cell unit 13 consists of two serially connected 1.6∼1.8V alkaline rechargeable cells 131. That is, the acid rechargeable cell 121 has an electric potential of 3.2∼3.6V that is close to a total electric potential of 3.2∼3.6V of the two alkaline rechargeable cells 131. Therefore, the electric potential of the acid rechargeable cell unit 12 is about 90 to 110% of the electric potential of the alkaline rechargeable cell unit 13. In addition, the acid rechargeable cell 121 has a capacity of 20Ah, while the alkaline rechargeable cells 131 respectively have a capacity of 20Ah. Therefore, the capacity of the acid rechargeable cell unit 12 is within the range of from 90 to 110% of the capacity of the alkaline rechargeable cell unit 13. Thus, the acid rechargeable cell unit 12 can have a real work capacity close to that of the alkaline rechargeable cell unit 13.

The aforesaid acid rechargeable cell 121 is a lithium iron phosphate (LFP) acid rechargeable cell; and the aforesaid alkaline rechargeable cell 131 is a nickel-zinc alkaline rechargeable cell.

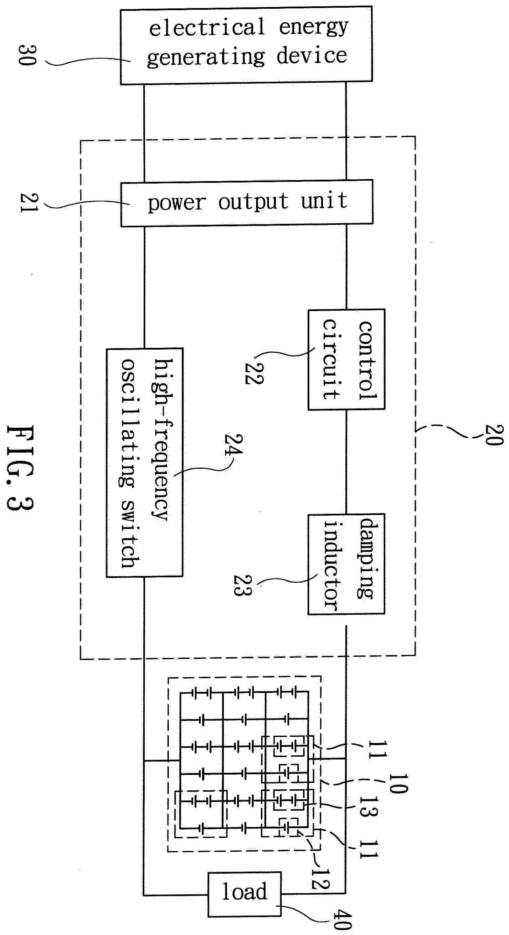

The acid/alkaline hybrid resonance battery device with damping function 10 according to the present invention must be charged with a charging device having damping function, such as the damping charging device disclosed in Taiwan New Utility Model Patent No. M484854. Please refer to Fig. 3. The charging device 20 includes a power output unit 21, a control circuit 22, a damping inductor 23, and a high-frequency oscillating switch 24. The power output unit 21 is connectable to an electrical energy generating device 30 and is used to increase or decrease a voltage of the electrical energy output by the electrical energy generating device 30 and then outputs a voltage-regulated electrical power. The acid/alkaline hybrid resonance battery device 10 is connected at a positive terminal to the damping inductor 23 and at a negative terminal to the high-frequency oscillating switch 24. The electrical energy generating device 30 can be a renewable energy generator or a grid power source. When the high-frequency oscillating switch 24 of the charging device 20 is actuated, the damping inductor 23 is caused to store and release electrical energy alternately at high frequency. When the high-frequency oscillating switch 24 is ON, the damping inductor 23 is caused to store electrical energy. On the other hand, when the high-frequency oscillating switch 24 is OFF, the damping inductor 23 is caused to release the stored electrical energy to charge the acid/alkaline hybrid resonance battery device 10. Therefore, the electrical energy released from the damping inductor 23 to charge the battery device 10 is electrical energy with frequency response. And, the battery device 10 can discharge to a load 40 for the same to work.

The acid rechargeable cell unit 12 and the alkaline rechargeable cell unit 13 get voltage balance between them through instantaneous high-frequency resonance, which is a damping effect. Since every battery cell 11 in the battery device 10 will generate self-resonance during the charge and the discharge process without causing a rising temperature thereof, the battery device 10 can have a prolonged service life. Since the electric potential of the acid rechargeable cell unit 12 and of the alkaline rechargeable cell unit 13 automatically get equal or close to each other and into a balanced state, it is no longer necessary to use a battery management system (BMS). As a result, an electrical appliance does not require a BMS circuit board to thereby have lowered manufacturing cost and reduced overall weight.

Since every battery cell 11 of the battery device 10 has the damping property of self-resonance, more charge and discharge paths can be provided in the battery device 10 to enable even fast charge and discharge when more battery cells 11 are provided in the battery device 10.

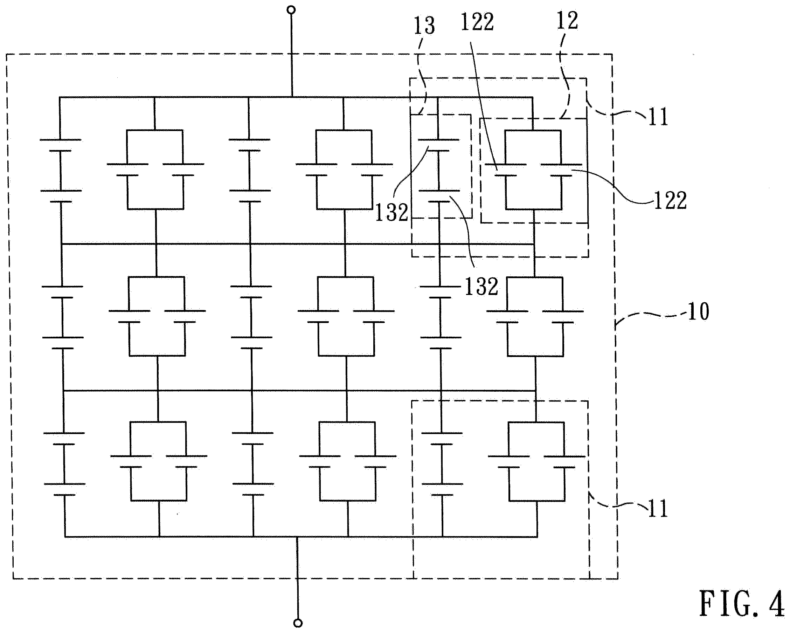

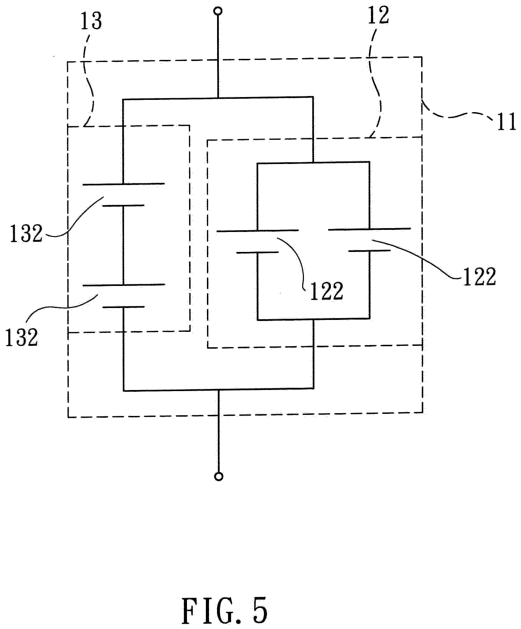

Figs. 4 and 5 show a battery device 10 according to a second embodiment of the present invention. In the second embodiment, the acid rechargeable cell unit 12 in every battery cell 11 of the battery device 10 consists of two parallelly connected 3.2∼3.6V acid rechargeable cells 122, while the alkaline rechargeable cell unit 13 consists of two serially connected 1.6∼1.8V alkaline rechargeable cells 132. Accordingly, the electric potential of the acid rechargeable cell unit 12 is from 90 to 110% of that of the alkaline rechargeable cell unit 13. Further, every acid rechargeable cell 122 has a capacity of 1250mAh while the alkaline rechargeable cell 132 has a capacity of 2500mAh. That is, the capacity of the acid rechargeable cell 122 is one half of that of the alkaline rechargeable cell 132. In other words, the capacity of the acid rechargeable cell 122 is about 45∼55% of that of the alkaline rechargeable cell 132. Accordingly, the acid rechargeable cell unit 12 has a total capacity of 2500mAh (i.e. 1250mAh x 2 = 2500mAh), which is within the range from 90 to 110% of the total capacity of the alkaline rechargeable cell unit 13. Thus, two acid rechargeable cells 122 can be connected in parallel to increase the capacity of the acid rechargeable cell unit 12 to a level close to that of the alkaline rechargeable cell unit 13.

In summary, due to the resonance damping effect between the acid rechargeable cell unit 12 and the alkaline rechargeable cell unit 13, the battery device 10 provided according to the present invention has the following properties:
(1) An electric potential balance between the acid rechargeable cell unit 12 and the alkaline rechargeable cell unit 13 can be automatically achieved without the need of providing any battery management system (BMS).
(2) The internal resistance between the acid rechargeable cell unit 12 and the alkaline rechargeable cell unit 13 is low, which does not cause a rising temperature of the battery device 10 to ensure stable operation of the battery device 10.
(3) The number of the serially or parallelly connected battery cells 11 in the battery device 10 can be increased to not only enable increased voltage for energy storage and increased electric current for discharge, but also provide increased charge and discharge paths to enable even fast charge and discharge of the battery device 10.

The present invention has been described with some preferred embodiments thereof and it is understood that many changes and modifications in the described embodiments can be carried out without departing from the scope of the invention that is intended to be limited only by the appended claims.

## Claims

1. An acid/alkaline hybrid resonance battery device (10) with damping function, comprising a plurality of battery cells (11); wherein every battery cell (11) including an acid rechargeable cell unit (12) and an alkaline rechargeable cell unit (13), which are electrically connected in parallel; the acid rechargeable cell unit (12) including at least one acid rechargeable cell (121), and the alkaline rechargeable cell unit (13) including at least one alkaline rechargeable cell (131); in the case there being more than one alkaline rechargeable cell (131)in the alkaline rechargeable cell unit (13), the alkaline rechargeable cells (131) being connected in series,
**characterized in that**
the plurality of similar battery cells (11) are connected in either series or parallel; wherein the acid rechargeable cell (121) is a lithium iron phosphate (LFP) acid rechargeable cell (121), which can support to storage current-type electrical energy; wherein the alkaline rechargeable cell (131) is a nickel-zinc alkaline rechargeable cell (131), which can support to storage voltage-type electrical energy; the acid rechargeable cell (121) unit having an electric potential that is about 90 to 110% of that of the alkaline rechargeable cell unit (13), and the acid rechargeable cell unit (12) having a capacity that is about 90 to 110% of that of the alkaline secondary cell unit; whereby a resonance damping effect is produced when the acid rechargeable cell unit (12) and the alkaline rechargeable cell unit (13) automatically keep maintaining an electric potential balance between them during the charging process and the discharging process.

2. The acid/alkaline hybrid resonance battery device (10) with damping function as claimed in claim 1, wherein the acid rechargeable cell unit (12) consists of one 3.2∼3.6V acid rechargeable cell (121), the alkaline rechargeable cell unit (13) consists of two 1.6∼1.8V alkaline rechargeable cells (131), which connected in series. And the acid rechargeable cell (121) has a capacity that is about 90 to 110% of that of the alkaline rechargeable cell (131).

3. The acid/alkaline hybrid resonance battery device (10) with damping function as claimed in claim 1, wherein the acid rechargeable cell unit (12) consists of two connected 3.2∼3.6V acid rechargeable cells (122), which connected in parallel, the alkaline rechargeable cell unit (13) consists of two 1.6∼1.8V alkaline rechargeable cells (132), which connected in series. And the acid rechargeable cell (122) has a capacity that is about 90 to 110% of that of the alkaline rechargeable cell (132).

4. An acid/alkaline hybrid resonance battery device (10) with damping function, comprising an acid rechargeable cell unit (12) and an alkaline rechargeable cell unit (13), which are electrically connected in parallel; the acid rechargeable cell unit (12) including at least one acid rechargeable cell (121), and the alkaline rechargeable cell unit (13) including at least one alkaline rechargeable cell (131); in the case there being more than one alkaline rechargeable cell (131) in the alkaline rechargeable cell unit (13), the alkaline rechargeable cells (131) being connected in series; wherein the acid rechargeable cell (121) is a lithium iron phosphate (LFP) acid rechargeable cell (121), which can support to storage current-type electrical energy; wherein the alkaline rechargeable cell (131)is a nickel-zinc alkaline rechargeable cell (131), which can support to storage voltage-type electrical energy; the acid rechargeable cell unit (12) having an electric potential that is about 90 to 110% of that of the alkaline rechargeable cell unit (13), and the acid rechargeable cell unit (12) having a capacity that is about 90 to 110% of that of the alkaline rechargeable cell unit (13); whereby a resonance damping effect is produced when the acid rechargeable cell unit (12) and the alkaline rechargeable cell unit (13) automatically keep maintaining an electric potential balance between them during the charging process and the discharging process.

5. The acid/alkaline hybrid resonance battery device (10) with damping function as claimed in claim 4, wherein the acid rechargeable cell unit (12) consists of one 3.2∼3.6V acid rechargeable cell (121), the alkaline rechargeable cell unit (13) consists of two 1.6∼1.8V alkaline rechargeable cells (131), and the acid rechargeable cell (121) has a capacity that is about 90 to 110% of that of the alkaline rechargeable cell (131).

6. The acid/alkaline hybrid resonance battery device (10) with damping function as claimed in claim 4, wherein the acid rechargeable cell unit (12) consists of two connected 3.2∼3.6V acid rechargeable cells (122), which connected in parallel. The alkaline rechargeable cell unit (13) consists of two serially connected 1.6∼1.8V alkaline rechargeable cells (132), and the acid rechargeable cell (122) has a capacity that is about 90 to 110% of that of the alkaline rechargeable cell (132).

## Patentansprüche

1. Säure / Alkali-Hybridresonanz-Batterievorrichtung (10) mit Dämpfungsfunktion, umfassend eine Vielzahl von Batteriezellen (11); wobei jede Batteriezelle (11) eine wiederaufladbare Säurezelleneinheit (12) und eine wiederaufladbare Alkalizelleneinheit (13) umfasst, die elektrisch parallel geschaltet sind; wobei die wiederaufladbare Säurezelleneinheit (12) mindestens eine wiederaufladbare Säurezelle (121) und die wiederaufladbare Alkalizelleneinheit (13) mindestens eine wiederaufladbare Alkalizelle (131) umfasst; falls sich mehr als eine wiederaufladbare Alkalizelle (131) in der wiederaufladbaren Alkalizelleinheit (13) befindet, sind die wiederaufladbaren Alkalizellen (131) in Reihe geschaltet,
**dadurch gekennzeichnet, dass**
die Vielzahl ähnlicher Batteriezellen (11) entweder in Reihe oder parallel geschaltet ist; wobei die wiederaufladbare Säurezelle (121) eine wiederaufladbare Lithiumeisenphosphat (LFP) Säurezelle (121) ist, die die Speicherung elektrischer Energie vom Stromtyp unterstützen kann; wobei die wiederaufladbare Alkalizelle (131) eine wiederaufladbare Nickel-Zink-Alkalizelle (131) ist, die die Speicherung elektrischer Energie vom Spannungstyp unterstützen kann; die wiederaufladbare Säurezelle (121) ein elektrisches Potential hat, das etwa 90 bis 110% desjenigen der der wiederaufladbaren Alkalizelleinheit (13) beträgt, und die wiederaufladbare Säurezelleneinheit (12) eine Kapazität hat, die etwa 90 bis 110% der sekundären Alkalizelleinheit; wodurch ein resonanzdämpfender Effekt erzeugt wird, wenn die wiederaufladbare Säurezelleneinheit (12) und die der wiederaufladbare Alkalizelleinheit (13) während des Ladevorgangs und des Entladevorgangs automatisch ein Gleichgewicht des elektrischen Potentials zwischen ihnen aufrecht erhalten.

2. Säure / Alkali-Hybrid-Resonanzbatterieanordnung (10) mit Dämpfungsfunktion nach Anspruch 1, wobei die wiederaufladbare Säurezelleneinheit (12) aus einer 3,2 bis 3,6 V wiederaufladbaren Säurezelle (121) besteht, die wiederaufladbare Alkalizelleinheit (13) aus zwei 1,6 bis 1,8 V wiederaufladbaren Alkalizellen (131) besteht, die in Reihe geschaltet sind, und die wiederaufladbare Säurezelle (121) eine Kapazität hat, die etwa 90 bis 110% der Kapazität der wiederaufladbaren Alkalizelle (131) beträgt.

3. Säure / Alkali-Hybridresonanz-Batterievorrichtung (10) mit Dämpfungsfunktion nach Anspruch 1, wobei die die wiederaufladbare Säurezelleneinheit (12) aus zwei verbundenen 3,2 bis 3,6 V wiederaufladbaren Säurezellen (122) besteht, die parallel geschaltet sind, die wiederaufladbare Alkalizelleneinheit (13) aus zwei 1,6 bis 1,8 V wiederaufladbaren Alkalizellen (132) besteht, die in Reihe geschaltet sind; und die wiederaufladbare Säurezelle (122) eine Kapazität hat, die etwa 90 bis 110% der Kapazität der wiederaufladbaren Alkalizelle (132) beträgt.

4. Säure / Alkali-Hybridresonanz-Batterievorrichtung (10) mit Dämpfungsfunktion, umfassend eine die wiederaufladbare Säurezelleneinheit (12) und eine wiederaufladbare Alkalizelleinheit (13), die elektrisch parallel geschaltet sind; wobei die wiederaufladbare Säurezelleneinheit (12) mindestens eine wiederaufladbare Säurezelle (121) und die wiederaufladbare Alkalizelleneinheit (13) mindestens eine wiederaufladbare Alkalizelle (131) umfasst; falls sich mehr als eine wiederaufladbare Alkalizelle (131) in der der wiederaufladbaren Alkalizelleneinheit (13) befindet, sind die wiederaufladbaren Alkalizellen (131) in Reihe geschaltet; wobei die wiederaufladbare Säurezelle (121) eine wiederaufladbare Lithiumeisenphosphat (LFP) Säurezelle (121) ist, die die Speicherung elektrischer Energie vom Stromtyp unterstützen kann; wobei die wiederaufladbare Alkalizelle (131) eine wiederaufladbare Nickel-Zink-Alkalizelle (131) ist, die die Speicherung elektrischer Energie vom Spannungstyp unterstützen kann; die wiederaufladbare Säurezelleneinheit (12) ein elektrisches Potential hat, das etwa 90 bis 110% von dem der wiederaufladbaren Alkalizelleinheit (13) beträgt, und die wiederaufladbare Säurezelleneinheit (12) eine Kapazität von etwa 90 bis 110% derjenigen der der wiederaufladbaren Alkalizelleinheit (13) hat; wodurch ein resonanzdämpfender Effekt erzeugt wird, wenn die wiederaufladbare Säurezelleneinheit (12) und die der wiederaufladbare Alkalizelleinheit (13) während des Ladevorgangs und des Entladevorgangs automatisch ein Gleichgewicht des elektrischen Potentials zwischen ihnen aufrecht erhalten.

5. Säure / Alkali-Hybridresonanz-Batterievorrichtung (10) mit Dämpfungsfunktion nach Anspruch 4, wobei die wiederaufladbare Säurezelleneinheit (12) aus einer wiederaufladbaren 3,2 bis 3,6 V Säurezelle (121) besteht, die wiederaufladbare Alkalizelleinheit (13) aus zwei wiederaufladbaren 1,6 bis 1,8 V Alkalizellen (131) besteht, und die wiederaufladbare Säurezelle (121) eine Kapazität hat, die etwa 90 bis 110% der Kapazität der wiederaufladbaren Alkalizelle (131) beträgt.

6. Säure / Alkali-Hybridresonanz-Batterievorrichtung (10) mit Dämpfungsfunktion nach Anspruch 4, wobei die wiederaufladbare Säurezelleneinheit (12) aus zwei verbundenen 3,2 bis 3,6 V wiederaufladbaren Säurezellen (122) besteht, die parallel geschaltet sind, die wiederaufladbare Alkalizelleinheit (13) aus zwei in Reihe geschalteten 1,6 bis 1,8 V wiederaufladbaren Alkalizellen (132) besteht, und die wiederaufladbare Säurezelle (122) eine Kapazität hat, die etwa 90 bis 110% der Kapazität der wiederaufladbaren Alkalizelle (132) beträgt.

## Revendications

1. Dispositif de batterie de résonance hybride acide/alcaline (10) avec fonction d'amortissement, comprenant une pluralité de cellules de batterie (11) ; dans lequel chaque cellule de batterie (11) incluant une unité de cellule rechargeable acide (12) et une unité de cellule rechargeable alcaline (13), qui sont connectées électriquement en parallèle ; l'unité de cellule rechargeable acide (12) incluant au moins une cellule rechargeable acide (121) et l'unité de cellule rechargeable alcaline (13) incluant au moins une cellule rechargeable alcaline (131) ; au cas où il y a plus d'une cellule rechargeable alcaline (131) dans l'unité de cellule rechargeable alcaline (13), les cellules rechargeables alcalines (131) étant connectées en série,
**caractérisé en ce que**
la pluralité de cellules de batterie similaires (11) sont connectées soit en série, soit en parallèle ; dans lequel la cellule acide rechargeable (121) est une cellule rechargeable acide (121) au phosphate de fer lithié (LFP), qui peut prendre en charge le stockage d'une énergie électrique de type courant ; dans lequel la cellule rechargeable alcaline (131) est une cellule rechargeable alcaline nickel-zinc (131), qui peut prendre en charge le stockage d'une énergie électrique de type tension ; l'unité de cellule rechargeable acide (121) ayant un potentiel électrique qui est environ 90% à 110% de celui de l'unité de cellule rechargeable alcaline (13), et l'unité de cellule rechargeable acide (12) ayant une capacité qui est environ 90% à 110% de celle de l'unité de cellule secondaire alcaline ; moyennant quoi un effet d'amortissement de résonance est produit lorsque l'unité de cellule rechargeable acide (12) et l'unité de cellule rechargeable alcaline (13) conservent automatiquement un équilibre de potentiel électrique entre eux pendant le processus de charge et le processus de décharge.

2. Dispositif de batterie de résonance hybride acide/alcaline (10) avec fonction d'amortissement selon la revendication 1, dans lequel l'unité de cellule rechargeable acide (12) est constituée d'une cellule rechargeable acide 3,2-3,6 V (121), l'unité de cellule rechargeable alcaline (13) est constituée de deux cellules rechargeables alcalines 1,6-1,8 V (131), qui sont connectées en série et la cellule rechargeable acide (121) a une capacité qui est environ 90 à 110% de celle de la cellule rechargeable alcaline (131).

3. Dispositif de batterie de résonance hybride acide/alcaline (10) avec fonction d'amortissement selon la revendication 1, dans lequel l'unité de cellule rechargeable acide (12) est constituée de deux cellules rechargeables acides 3,2-3,6 V (122) connectées, qui sont connectées en parallèle, l'unité de cellule rechargeable alcaline (13) est constituée de deux cellules rechargeables alcalines 1,6-1,8 V (132), qui sont connectées en série et la cellule rechargeable acide (122) a une capacité qui es environ 90 à 110% de celle de la cellule rechargeable alcaline (132) .

4. Dispositif de batterie de résonance hybride acide/alcaline (10) avec fonction d'amortissement comprenant une unité de cellule rechargeable acide (12) et une unité de cellule rechargeable alcaline (13), qui sont connectées électriquement en parallèle ; l'unité de cellule rechargeable acide (12) incluant au moins une cellule rechargeable acide (121) et l'unité de cellule rechargeable alcaline (13) incluant au moins une cellule rechargeable alcaline (131) ; au cas où il y a plus d'une cellule rechargeable alcaline (131) dans l'unité de cellule rechargeable alcaline (13), les cellules rechargeables alcalines (131) étant connectées en série ; dans lequel la cellule acide rechargeable (121) est une cellule rechargeable acide (121) au phosphate de fer lithié (LFP), qui peut prendre en charge le stockage d'une énergie électrique de type courant ; dans lequel la cellule rechargeable alcaline (131) est une cellule rechargeable alcaline nickel-zinc (131), qui peut prendre en charge le stockage d'une énergie électrique de type tension ; l'unité de cellule rechargeable acide (12) ayant un potentiel électrique qui est environ 90% à 110% de celui de l'unité de cellule rechargeable alcaline (13), et l'unité de cellule rechargeable acide (12) ayant une capacité qui est environ 90% à 110% de celle de l'unité de cellule rechargeable alcaline (13) ; moyennant quoi un effet d'amortissement de résonance est produit lorsque l'unité de cellule rechargeable acide (12) et l'unité de cellule rechargeable alcaline (13) conservent automatiquement un équilibre de potentiel électrique entre eux pendant le processus de charge et le processus de décharge.

5. Dispositif de batterie de résonance hybride acide/alcaline (10) avec fonction d'amortissement selon la revendication 4, dans lequel l'unité de cellule rechargeable aide (12) est constituée d'une cellule rechargeable acide 3,2-3,6 V (121), l'unité de cellule rechargeable alcaline (13) est constituée de deux cellules rechargeables alcalines 1,6-1,8 V (131), qui sont connectées en série et la cellule rechargeable acide (121) a une capacité qui est environ 90 à 110% de celle de la cellule rechargeable alcaline (131).

6. Dispositif de batterie de résonance hybride acide/alcaline (10) avec fonction d'amortissement selon la revendication 4, dans lequel l'unité de cellule rechargeable acide (12) est constituée de deux cellules rechargeables acides 3,2-3,6 V (122) connectées, qui sont connectées en parallèle, l'unité de cellule rechargeable alcaline (13) est constituée de deux cellules rechargeables alcalines 1,6-1,8 V (132), qui sont connectées en série et la cellule rechargeable acide (122) a une capacité qui es environ 90 à 110% de celle de la cellule rechargeable alcaline (132) .
